# EUROPEAN PATENT SPECIFICATION

(11) **EP 4 390 872 B1**
(45) Date of publication and mention of the grant of the patent: **02.12.2026**
(21) Application number: 23217543.0
(22) Date of filing: 18.12.2023
(51) Int. Cl.: G06V 10/82, G06Q 20/20, G06V 20/52, G07G 1/00, G07G 3/00, G06Q 20/18

(54) **INFORMATION PROCESSING PROGRAM, INFORMATION PROCESSING METHOD, AND INFORMATION PROCESSING DEVICE**
INFORMATIONSVERARBEITUNGSPROGRAMM, INFORMATIONSVERARBEITUNGSVERFAHREN UND INFORMATIONSVERARBEITUNGSVORRICHTUNG
PROGRAMME DE TRAITEMENT D'INFORMATIONS, PROCÉDÉ DE TRAITEMENT D'INFORMATIONS ET DISPOSITIF DE TRAITEMENT D'INFORMATIONS

(30) Priority: 23.12.2022 JP 2022207689
(43) Date of publication of application: 26.06.2024
(73) Proprietor: FUJITSU LIMITED, Kawasaki-shi, Kanagawa 211-8588 (JP)
(72) Inventor: Obinata, Yuya, Kawasaki-shi, Kanagawa 211-8588 (JP); Yamamoto, Takuma, Kawasaki-shi, Kanagawa 211-8588 (JP); Uchida, Daisuke, Kawasaki-shi, Kanagawa 211-8588 (JP)
(74) Representative: Hoffmann Eitle

(56) References cited:
- JP-A- 2022 187 215
- US-A1- 2019 236 363

## Description

### FIELD

The embodiments discussed herein are related to an information processing program, an information processing method, and an information processing device.

### BACKGROUND

Image recognition technology for recognizing a specific object from an image has been widely used. With this technology, for example, a region of the specific object in the image is specified as a bounding box (Bbox). Furthermore, there is technology for performing object image recognition using machine learning. Then, such image recognition technology is considered to be applied, for example, to monitoring of a customer's purchasing behavior in a store or work management of workers in a factory.

In stores such as supermarkets and convenience stores, self-checkout machines are becoming popular. The self-checkout machine is a point of sale (POS) cash register system by which a user who purchases a product himself/herself performs operations from reading of a barcode of the product to payment. For example, by introducing the self-checkout machine, it is possible to overcome shortage of labor caused by population reduction and suppress labor cost.

Japanese Laid-open Patent Publication No. 2019-29021 is disclosed as related art.

US 2019/0236363 A1, refers to verifying machine-readable labels associated with merchandise. Scan operations on a plurality of machine-readable labels is performed. A graphical user interface processing modifies captured images of the scanned items in preparation for training an artificial intelligence apparatus to identify items in the images. A machine language model determines whether the images training the model are correctly identified with machine-readable labels associated with the items.

### SUMMARY

### [TECHNICAL PROBLEM]

However, since a positional relationship of Bboxes extracted from a video is based on a two-dimensional space, for example, the depth between the Bboxes cannot be analyzed, and it is difficult to detect a relationship between an accounting machine such as a self-checkout machine and a product to be registered in the accounting machine. Furthermore, it is difficult for the accounting machine to detect a force majeure error and intentional fraud by a user.

The force majeure error includes a scan omission in which a user forgets to scan a product and moves the product from a basket to a plastic bag, for example, a reading error for erroneously reading a barcode on a can when barcodes are attached to a beer box, including a set of six cans, and each of cans, for example. Furthermore, the intentional fraud includes barcode concealment for pretending to scan a product while hiding only the barcode with the finger by the user, or the like.

Note that, although it is considered to automatically count the number of products and detect fraud, by introducing a weight sensor or the like in each self-checkout machine. However, cost is excessive, and it is not realistic, particularly, for large stores and stores located across the country.

In one aspect, an object is to provide an information processing program, an information processing method, and an information processing device capable of identifying a product registered in an accounting machine.

### [SOLUTION TO PROBLEM]

The object of the invention is solved by the subject matter of the independent claims. Advantageous embodiments of the invention are disclosed in the dependent claims. According to an aspect , an information processing program for causing a computer to execute a process, the process includes acquiring video data each image data of which includes a registration machine used to register a product by a user; extracting, from the acquired video data, image data that include products by specifying a first region that includes a hand of the user, a second region that includes a product, and a relationship between the first region and the second region, for the image data of the acquired video data; specifying a timing when first information regarding a first product registered to the registration machine by the user; specifying certain image data of the image data that includes a second product held in the hand of the user within a certain time period from the timing and placed in a place in an angle of view of the video data that is not a place where a product that has been registered to the registration machine is placed for most of the certain time period, based on the first region for the image data, the second region for the image data, and the relationship for the image data; specifying second information regarding the second product by inputting the certain image data to a machine learning model; and generating an alert when the first information and the second information do not match.

The scope of the present invention is defined by the appended claims.

### [ADVANTAGEOUS EFFECTS OF INVENTION]

According to one embodiment, it is possible to identify a product registered in an accounting machine.

### BRIEF DESCRIPTION OF DRAWINGS

FIG. 1 is a diagram illustrating an overall configuration example of a self-checkout machine system according to a first embodiment;
FIG. 2 is a diagram for explaining an example of detection of an abnormal behavior according to the first embodiment;
FIG. 3 is a functional block diagram illustrating a functional configuration of an information processing device according to the first embodiment;
FIG. 4 is a diagram for explaining training data;
FIG. 5 is a diagram for explaining machine learning of a first machine learning model;
FIG. 6 is a diagram for explaining machine learning of a second machine learning model;
FIG. 7 is a diagram for explaining extraction of a product region;
FIG. 8 is a diagram for explaining specification of a coordinate position of the product region;
FIG. 9 is a diagram for explaining specification of information to be a determination target of fraud;
FIG. 10 is a diagram for explaining specification of a product region used to determine the fraud;
FIG. 11 is a diagram for explaining specification of a product region used to determine the fraud using HOID;
FIG. 12 is a diagram for explaining specification of a product region used to determine the fraud using a distribution;
FIG. 13 is a diagram for explaining specification of a product item;
FIG. 14 is a diagram for explaining detection of a fraudulent behavior;
FIG. 15 is a diagram illustrating an alert display example on a self-checkout machine;
FIG. 16 is a diagram illustrating an alert display example to a clerk;
FIG. 17 is a flowchart illustrating a flow of processing of the information processing device;
FIG. 18 is a flowchart illustrating a flow of processing of the self-checkout machine;
FIG. 19 is a diagram for explaining a hardware configuration example; and
FIG. 20 is a diagram for explaining a hardware configuration example of the self-checkout machine.

### DESCRIPTION OF EMBODIMENTS

Hereinafter, embodiments of an information processing program, an information processing method, and an information processing device disclosed in the present application will be described in detail with reference to the drawings. Note that these embodiments do not limit the present disclosure. Furthermore, the embodiments may be appropriately combined with each other in a range without contradiction.

### [First Embodiment]

### <Description of Self-checkout Machine System>

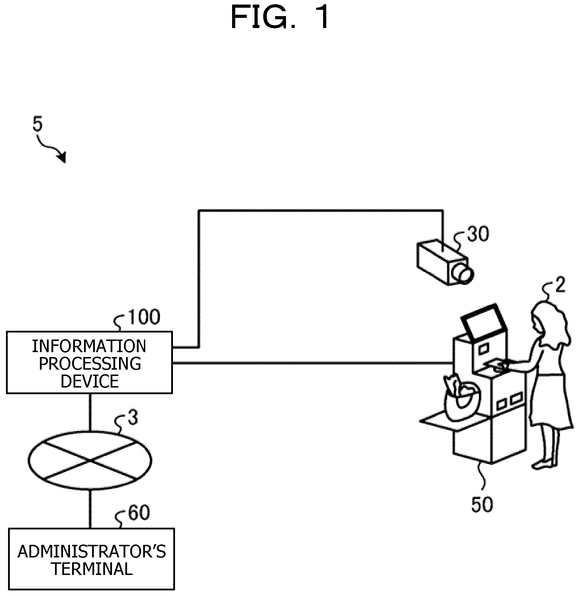

FIG. 1 is a diagram illustrating an overall configuration example of a self-checkout machine system 5 according to a first embodiment. As illustrated in FIG. 1, the self-checkout machine system 5 includes a camera 30, a self-checkout machine 50, an administrator's terminal 60, and an information processing device 100.

The information processing device 100 is an example of a computer coupled to the camera 30 and the self-checkout machine 50. The information processing device 100 is coupled to the administrator's terminal 60, via a network 3 for which various wired and wireless communication networks can be adopted. The camera 30 and the self-checkout machine 50 may be coupled to the information processing device 100, via the network 3.

The camera 30 is an example of a camera that captures a video of a region including the self-checkout machine 50. The camera 30 transmits data of a video to the information processing device 100. In the following description, there is a case where the data of the video is referred to as "video data" or is simply referred to as a "video".

The video data includes a plurality of time-series image frames. To each image frame, a frame number is assigned in a time-series ascending order. One image frame is image data of a still image captured by the camera 30 at a certain timing. In the following description, there is a case where the image data is simply referred to as an "image".

The self-checkout machine 50 is an example of a POS cash register system or an accounting machine with which a user 2 who purchases a product performs operations from reading a barcode of the product to payment. For example, when the user 2 moves a product to be purchased to a scan region of the self-checkout machine 50, the self-checkout machine 50 scans a barcode of the product and registers the product as a product to be purchased.

Note that, as described above, the self-checkout machine 50 is an example of a self-checkout machine that registers (register operation) a product to be purchased by a customer and makes a payment, and is referred to as, for example, Self checkout, automated checkout, self-checkout machine, self-check-out register, or the like. The barcode is one type of an identifier representing a numerical value or a character depending on thicknesses of striped lines, and the self-checkout machine 50 can specify the price, the type (for example, food), or the like of the product by scanning (reading) the barcode. The barcode is an example of a code, and two dimensional codes such as a quick response (QR) code having the same function can be used, in addition to the barcode.

The user 2 repeatedly performs the operation of the product registration described above, and when the scan of the product is completed, the user 2 operates a touch panel or the like of the self-checkout machine 50, and makes a settlement request. Upon receiving the settlement request, the self-checkout machine 50 presents the number of products to be purchased, the purchase price, or the like, and executes settlement processing. The self-checkout machine 50 stores information regarding the products that have been scanned from when the user 2 starts scanning to when the settlement request is issued, in a storage unit and transmits the information to the information processing device 100 as self-checkout machine data (product information).

The administrator's terminal 60 is an example of a terminal device used by an administrator of a store. The administrator's terminal 60 receives an alert notification indicating that fraud has been performed regarding purchase of a product or the like, from the information processing device 100.

With such a configuration, the information processing device 100 acquires video data of a predetermined area including the self-checkout machine 50 with which a person registers a product and inputs the acquired video data into a first machine learning model, so as to detect a product region from the video data. The information processing device 100 stores time-series coordinate positions of the detected product region in the storage unit. The information processing device 100 specifies a timing based on an operation of the person for registering the product in the self-checkout machine 50, and specifies a product region related to the product registered in the self-checkout machine 50, based on the specified timing based on the operation and the time-series coordinate positions stored in the storage unit.

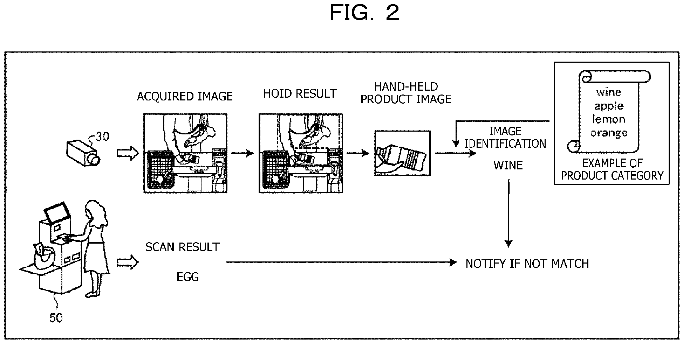

FIG. 2 is a diagram for explaining an example of detection of an abnormal behavior according to the first embodiment. As illustrated in FIG. 2, the information processing device 100 acquires image data from the video data captured by the camera 30 that images the self-checkout machine 50 and acquires a Human-Object Interaction Detection (HOID) result from the acquired image data, using the HOID or the like. That is, the information processing device 100 acquires a region of a person, a region of an object, and a relationship between the person and the object, from the video data.

Subsequently, the information processing device 100 generates hand-held product image data (hereinafter, may be referred to as hand-held product image) obtained by extracting a region portion of the object (product) related to the person, from the image data of the HOID result. Then, the information processing device 100 analyzes the hand-held product image and identifies an image of a product (for example, wine) imaged in the hand-held product image.

On the other hand, the information processing device 100 acquires a scan result (for example, egg) that is information regarding the product scanned by the self-checkout machine 50, from the self-checkout machine 50.

Here, the information processing device 100 compares the product item (for example, wine) specified from the video data with the product item (for example, egg) actually scanned by the self-checkout machine 50, and in a case where the product items do not match, the information processing device 100 determines that an abnormal behavior (fraud) is performed and notifies of an alert.

That is, the information processing device 100 analyzes the image data captured at the scanned timing and determines whether or not a product to be scanned and an actually scanned product match. As a result, since the information processing device 100 can detect fraud (for example, banana trick) in which, after a product with no barcode on the product itself is held, another inexpensive product is registered on a registration screen of the self-checkout machine 50, the information processing device 100 can identify the product registered in the self-checkout machine 50.

### <Functional Configuration>

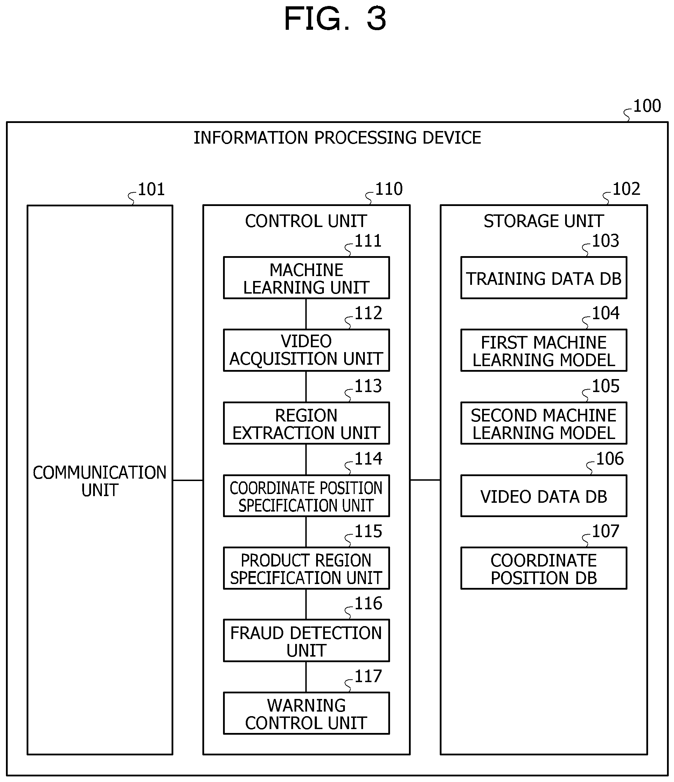

FIG. 3 is a functional block diagram illustrating a functional configuration of the information processing device 100 according to the first embodiment. As illustrated in FIG. 3, the information processing device 100 includes a communication unit 101, a storage unit 102, and a control unit 110.

The communication unit 101 is a processing unit that controls communication with another device and, for example, is implemented by a communication interface or the like. For example, the communication unit 101 receives video data from the camera 30 and transmits a processing result by the control unit 110 to the administrator's terminal 60.

The storage unit 102 is a processing unit that stores various types of data, programs executed by the control unit 110, or the like, and is implemented by a memory, a hard disk, or the like. The storage unit 102 stores a training data database (DB) 103, a first machine learning model 104, a second machine learning model 105, a video data DB 106, and a coordinate position DB 107.

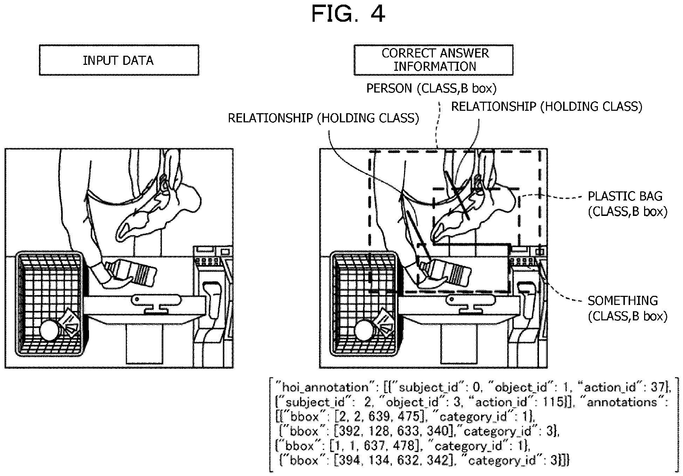

The training data DB 103 is a database that stores training data used to train the first machine learning model 104 and training data used to train the second machine learning model 105. For example, an example will be described where Human-Object Interaction Detection (HOID) is adopted for the first machine learning model 104, with reference to FIG. 4. FIG. 4 is a diagram for explaining training data. As illustrated in FIG. 4, each piece of the training data includes image data to be input data and correct answer information (label) set to the image data.

To the correct answer information, classes of a person and an object to be detected, a class indicating an interaction between the person and the object, and a bounding box (Bbox: object region information) indicating a region of each class are set. For example, as the correct answer information, region information of a Something class indicating an object, which is an object such as a product, other than a plastic bag, region information of a class of a person indicating a user who purchases the product, and a relationship (holding class) indicating an interaction between the Something class and the class of the person are set. That is, information regarding the object held by the person is set, as the correct answer information. Note that, the class of the person is an example of a first class, the Something class is an example of a second class, the region information of the class of the person is an example of a first region, the region information of the Something class is an example of a second region, and the interaction between the person and the object is an example of an interaction.

Furthermore, as the correct answer information, region information of a class of a plastic bag indicating the plastic bag, region information of a class of a person indicating a user who uses the plastic bag, and a relationship (holding class) indicating an interaction between the class of the plastic bag and the class of the person are set. That is, information regarding the plastic bag held by the person is set, as the correct answer information.

Typically, when the Something class is created by normal object identification (object recognition), all objects that have no relation with a task such as all backgrounds, clothes, or accessories are detected. In addition, since all of these are Somethings, only a large number of Bboxes are identified in the image data, and nothing is found. In a case of the HOID, a special relationship such that a person holds things (may be other relationships such as sitting or operating) is found. Therefore, the information can be used for a task (for example, fraud detection task of self-checkout machine) as meaningful information. After detecting the object with the Something, the plastic bag or the like is identified as a unique class of Bag (plastic bag). Although this plastic bag is valuable information in a fraud detection task of the self-checkout machine, the plastic bag is not important information in other tasks. Therefore, it is worth using the information based on unique knowledge of the fraud detection task of the self-checkout machine indicating that the product is taken out from a basket (shopping basket) and is put into a bag, and a useful effect is obtained.

Returning to FIG. 3, the first machine learning model 104 is an example of a machine learning model that is trained to identify a person and an object imaged in training data (for example, person and storage (plastic bag or the like)). Specifically, the first machine learning model 104 is a machine learning model that identifies the person, the product, and the relationship between the person and the product from the input image data, and outputs an identification result. For example, the first machine learning model 104 can adopt the HOID and can also adopt a machine learning model using various neural networks or the like. In a case of the HOID, "the class and the region information of the person, the class and the region information of the product (object), and the interaction between the person and the product" are output.

The second machine learning model 105 is an example of a machine learning model trained to specify an item of a product imaged in training data. For example, the second machine learning model 105 may be implemented by a zero-shot image classifier. In this case, the second machine learning model 105 uses a list of texts and an image as inputs and outputs a text having the highest similarity to the image, in the list of the texts, as a label of the image.

Here, as an example of the zero-shot image classifier described above, contrastive language-image pre-training (CLIP) is exemplified. The CLIP implements embedding of a plurality types of, so-called multimodal images and texts into a feature space. That is, with the CLIP, by training an image encoder and a text encoder, embedding, in which a vector distance between a pair of an image and a text having close meanings is shortened, is implemented. For example, the image encoder may be implemented by a vision transformer (ViT) or may be implemented by a convolutional neural network, for example, a ResNet or the like. Furthermore, the text encoder may be implemented by a generative pre-trained transformer (GPT) based Transformer or may be implemented by a recurrent neural network, for example, a long short-term memory (LSTM).

The video data DB 106 is a database that stores the video data captured by the camera 30 provided in the self-checkout machine 50. For example, the video data DB 106 stores the video data for each self-checkout machine 50 or each camera 30.

The coordinate position DB 107 is a database that stores coordinate positions that are position information of a product acquired from the video data, in time series. For example, the coordinate position DB 107 stores coordinate positions of a product in time series, for each tracked product. Note that an origin to be the reference of the coordinate position can be arbitrarily set, for example, to be the center of the image data, a corner of the image data (for example, lower left corner (angle), or the like.

The control unit 110 is a processing unit that performs overall control of the information processing device 100 and, for example, is implemented by a processor or the like. The control unit 110 includes a machine learning unit 111, a video acquisition unit 112, a region extraction unit 113, a coordinate position specification unit 114, a product region specification unit 115, a fraud detection unit 116, and a warning control unit 117. Note that the machine learning unit 111, the video acquisition unit 112, the region extraction unit 113, the coordinate position specification unit 114, the product region specification unit 115, the fraud detection unit 116, and the warning control unit 117 are implemented by an electronic circuit included in a processor, a process executed by the processor, or the like.

### (Machine Learning)

The machine learning unit 111 is a processing unit that performs machine learning of the first machine learning model 104 and the second machine learning model 105, using each piece of the training data stored in the training data DB 103. Note that the first machine learning model 104 and the second machine learning model 105 may be machine learned in advance, and the machine learning unit 111 can execute the following processing as fine tuning in a case where accuracy of the machine-learned first machine learning model 104 and second machine learning model 105 is insufficient.

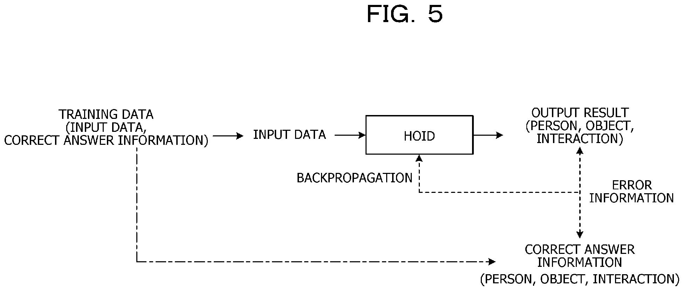

First, training of the first machine learning model 104 will be described. FIG. 5 is a diagram for explaining machine learning of the first machine learning model 104. In FIG. 5, an example in which the HOID is used for the first machine learning model 104 is illustrated. As illustrated in FIG. 5, the machine learning unit 111 inputs input data of the training data into the HOID and acquires an output result of the HOID. The output result includes a class of a person, a class of an object, an interaction between the person and the object, or the like detected by the HOID. Then, the machine learning unit 111 calculates error information between the correct answer information of the training data and the output result of the HOID and performs machine learning (training) for updating a parameter of the HOID through backpropagation, so as to reduce an error.

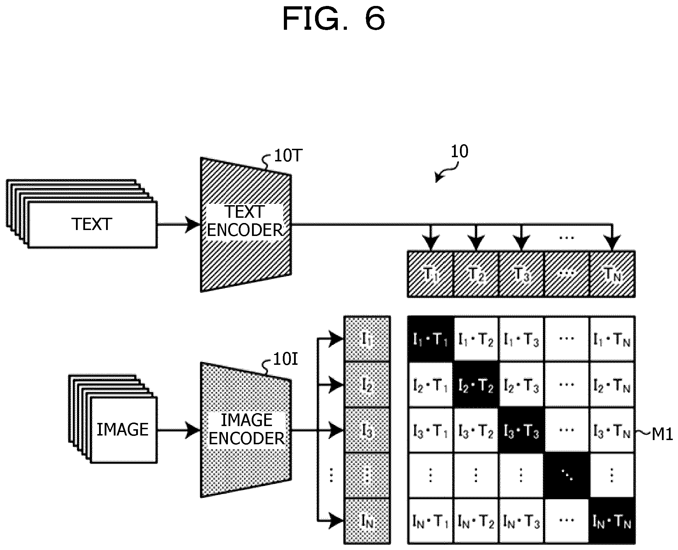

Next, training of the second machine learning model 105 will be described. FIG. 6 is a diagram for explaining machine learning of the second machine learning model 105. In FIG. 6, as an example of the second machine learning model 105, a CLIP model 10 is illustrated. As illustrated in FIG. 6, to train the CLIP model 10, a pair of image data (hereinafter, may be referred to as image) and a text is used as training data. For such training data, a dataset obtained by extracting a pair of an image and a text described as a caption of the image from a Web page on the Internet, so-called WebImageText (WIT) can be used. For example, a pair of an image such as a photograph of a dog or a picture in which an illustration of a dog is drawn and a text "dog picture" described as a caption of the image is used as the training data. By using the WIT as the training data in this way, a labeling work is not needed, and a large amount of training data can be acquired.

Among these pairs of the images and the texts, the image is input into an image encoder 10I, and the text is input into a text encoder 10T. The image encoder 10I to which the image is input in this way outputs a vector in which the image is embedded into a feature space. On the other hand, the text encoder 10T to which the text is input outputs a vector in which the text is embedded into a feature space.

For example, in FIG. 6, a mini batch having a batch size N including training data of a pair of an image 1 and a text 1, a pair of an image 2 and a text 2, ..., and N pairs of N images and N texts is illustrated. In this case, by inputting each of the images and the texts of the N pairs into the image encoder 10I and the text encoder 10T, a similarity matrix M1 of N × N embedding vectors can be obtained. Note that, the "similarity" used herein may be an inner product or cosine similarity between the embedding vectors, as merely an example.

Here, in the training of the CLIP model 10, a label is unstable since caption formats of Web texts varies. Therefore, an objective function called Contrastive objective is used.

In the Contrastive objective, in a case of an i-th image in mini batch, an i-th text corresponds to a correct pair. Therefore, the i-th text is a positive example, and all texts other than the i-th text are negative examples. That is, since a single positive example and N - 1 negative examples are set for each piece of training data, N positive examples and N² - N negative examples are generated in the entire mini batch. For example, in the example of the similarity matrix M1, elements of N diagonal components with black and white inversion display are positive examples, and elements of N² - N with white background display are negative examples.

Under such a similarity matrix M1, parameters of the image encoder 10I and the text encoder 10T for maximizing a similarity between the N pairs corresponding to the positive example and minimizing a similarity between the N² - N pairs corresponding to the negative example are trained.

For example, in an example of the first image 1, the first text is a positive example, second and subsequent texts are negative examples, and a loss, for example, a cross entropy error is calculated in a row direction of the similarity matrix M. By calculating such a loss for each of the N images, a loss related to an image is obtained. On the other hand, in an example of the second text 2, the second image is a positive example, and all images other than the second image are negative examples, and the loss is calculated in a column direction of the similarity matrix M. By calculating such a loss for each of the N texts, a loss related to a text is obtained. The image encoder 10I and the text encoder 10T update the parameter for minimizing a statistic value, for example, an average of the losses related to the images and the losses related to the texts.

Through such training of the image encoder 10I and the text encoder 10T for minimizing the Contrastive objective, the trained CLIP model 10 (for example, second machine learning model 105) is generated.

### (Video Acquisition)

The video acquisition unit 112 is a processing unit that acquires video data from the camera 30. For example, the video acquisition unit 112 acquires video data from the camera 30 provided in the self-checkout machine 50 as needed and stores the video data in the video data DB 106.

### (Region Extraction)

The region extraction unit 113 is a processing unit that extracts a product region from the video data, by inputting the video data acquired by the video acquisition unit 112 into the first machine learning model 104. Specifically, the region extraction unit 113 specifies a first region including a hand of a person, a second region including a product, and a relationship between the first region and the second region, from the video data, by inputting the video data into the first machine learning model 104 that is the HOID.

That is, the region extraction unit 113 extracts a region of a product that is a target of a behavior of a person in the video data. For example, the region extraction unit 113 extracts a region of a product taken out from a shopping basket, a product held by the person, and a product put into a plastic bag.

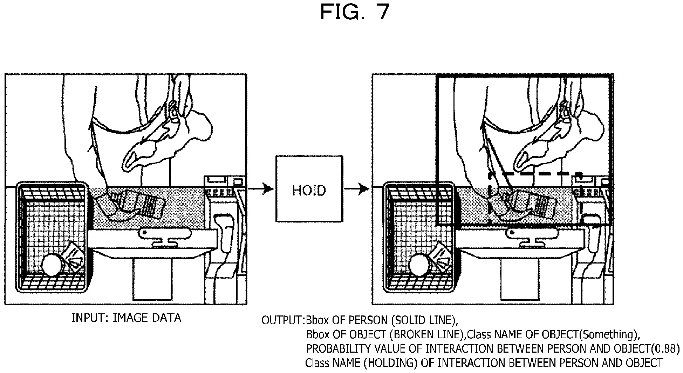

FIG. 7 is a diagram for explaining extraction of the product region. In FIG. 7, the image data to be input into the HOID and the output result of the HOID are illustrated. Moreover, in FIG. 7, a Bbox of a person is indicated by a frame of a solid line, and a Bbox of an object is indicated by a frame of a broken line. As illustrated in FIG. 7, the output result of the HOID includes the Bbox of the person, the Bbox of the object, a probability value of the interaction between the person and the object, a class name, or the like. With reference to the Bbox of the object of these, the region extraction unit 113 extracts the region of the product held by the person, by extracting the Bbox of the object, that is, a partial image corresponding to the frame of the broken line in FIG. 7, from the image data.

Furthermore, the region extraction unit 113 tracks the product, in a case where the product held with the hand of the person is detected. That is, the region extraction unit 113 tracks a movement related to the same product and a region of the same product, with consecutive frames in and subsequent to a certain frame from which the product region is extracted, in the video data. For example, for each product detected by the HOID, the region extraction unit 113 tracks the product from when the product is detected by the HOID to when the product put into the plastic bag is detected by the HOID. Then, the region extraction unit 113 stores a tracking result to the storage unit 102.

### (Specification of Coordinate Position)

The coordinate position specification unit 114 is a processing unit that specifies time-series coordinate positions of the product region extracted by the region extraction unit 113 and stores the coordinate positions in the storage unit. Specifically, the coordinate position specification unit 114 acquires coordinates of a product region of the tracked product in time series, from the start to the end of the tracking by the region extraction unit 113. For example, the coordinate position specification unit 114 acquires a center coordinate of the tracked product or each of coordinates of four corners used to specify the product region of the tracked product in time series.

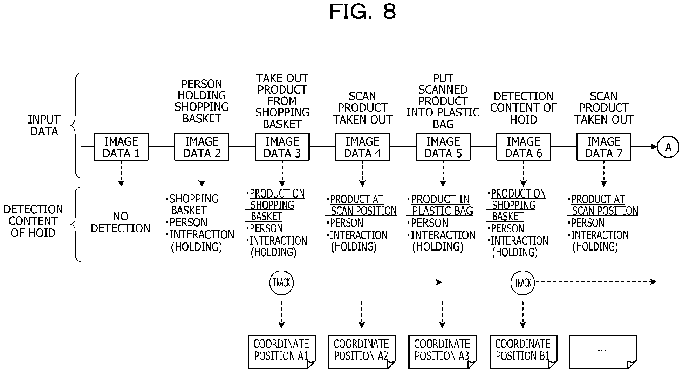

FIG. 8 is a diagram for explaining specification of a coordinate position of a product region. In FIG. 8, image data 1 to 7 that is input data into the HOID and detection content of the HOID when the image data 1 to 7 is sequentially input are illustrated. Note that, in FIG. 8, description written on the image data is information imaged in the image data, unknown information as the input into the HOID, and information to be detected by the HOID.

As illustrated in FIG. 8, the region extraction unit 113 acquires the image data 1 in which no person and no object is imaged, inputs the image data 1 into the HOID, and acquires the output result. However, the region extraction unit 113 determines that there is no detection result of persons and objects. Subsequently, the region extraction unit 113 acquires the image data 2 in which a person holding a shopping basket is imaged, inputs the image data 2 into the HOID, and detects the user 2 (person) and the shopping basket held by the user 2, according to an output result.

Subsequently, the region extraction unit 113 acquires the image data 3 in which a person who takes out a product from a shopping basket is imaged, inputs the image data 3 into the HOID, and detects a behavior of the user 2 for moving the holding product on the shopping basket, according to an output result. Then, the region extraction unit 113 starts tracking because the product is detected. Here, the coordinate position specification unit 114 acquires a coordinate position A1 of the product taken out from the shopping basket or a coordinate position A1 of a product region of the product taken out from the shopping basket. Note that the region extraction unit 113 can start tracking at a timing of the image data 2 in which only the shopping basket is detected. In this case, the region extraction unit 113 extracts a region as assuming the shopping basket as the product, and the coordinate position specification unit 114 acquires a coordinate position.

Subsequently, the region extraction unit 113 acquires the image data 4 in which a person who scans a product is imaged, inputs the image data 4 into the HOID, and detects a behavior of the user 2 for moving the holding product to a scan position, according to an output result. Here, the coordinate position specification unit 114 acquires a coordinate position A2 of the held product or a coordinate position A2 of a product region of the held product.

Subsequently, the region extraction unit 113 acquires the image data 5 in which a person who puts a product in a plastic bag is imaged, inputs the image data 5 into the HOID, and detects a behavior of the user 2 for putting the holding product into the holding plastic bag, according to an output result. Here, the coordinate position specification unit 114 acquires a coordinate position A3 of the product held in the plastic bag or a coordinate position A3 of a product region of the product held in the plastic bag.

Note that, since the region extraction unit 113 detects that the product has been put into the plastic bag, by analyzing the image data 5, the region extraction unit 113 ends the tracking of the product. Then, the coordinate position specification unit 114 stores the coordinate position A1, the coordinate position A2, and the coordinate position A3 that are the coordinate positions of the tracked product in time series, in the coordinate position DB 107.

In this way, the coordinate position specification unit 114 specifies the coordinate position of the product, generates time-series data of the coordinate positions, and stores the data in the coordinate position DB 107.

### (Product Region)

Returning to FIG. 3, the product region specification unit 115 is a processing unit that specifies a timing when the person performs an operation for registering the product in the self-checkout machine 50 and specifies a product region related to the product registered in the self-checkout machine 50 based on the specified operation timing and the time-series coordinate positions stored in the coordinate position DB 107.

For example, the product region specification unit 115 specifies the product region, based on a coordinate position immediately before the timing when the person performs the operation for registering the product in the self-checkout machine 50, from among the time-series coordinate positions stored in the coordinate position DB 107. Alternatively, the product region specification unit 115 specifies the product region, based on a coordinate position immediately after the timing when the person performs the operation for registering the product in the self-checkout machine 50, from among the time-series coordinate positions stored in the coordinate position DB 107.

It is expected that the person performs fraud for registering an inexpensive product by operating the self-checkout machine 50, without scanning the product, in a state where the held product is placed around the self-checkout machine 50. Therefore, the product region specification unit 115 specifies the product region of the product placed around the self-checkout machine 50 by the person who has held the product as a fraud determination target.

When purchasing a product with no barcode, a person operates the self-checkout machine 50 and registers the product to be purchased. At this time, fraud is considered such that, although a product to be purchased is a melon, the person registers a bunch of bananas that is cheaper than a melon, as the product to be purchased. Therefore, the product region specification unit 115 specifies the product region of the product placed around the self-checkout machine 50 by the person who has held the product as a fraud determination target.

Furthermore, fraud is considered such that, the person causes the self-checkout machine 50 to scan a barcode attached to a single product included in a set product, not a position of a barcode attached to the set product and purchases the set product with a low price region of the single product. For example, the set product is collectively packaged in a state where cans are arranged in two rows by three using a packaging material, so as to collectively carry six alcoholic beverage cans. At this time, a barcode is attached to each of the packaging material used to package the set of the plurality of alcoholic beverage cans and the can of the alcoholic beverage packaged using the packaging material. Fraud is considered such that a person causes the self-checkout machine 50 to scan the barcode of the alcoholic beverage packaged in the packaging material, not the barcode of the packaging material. The single product included in the set product is registered in the self-checkout machine 50. On the other hand, the product held by the user is the set product. Therefore, the product region specification unit 115 specifies the product region of the product placed around the self-checkout machine 50 by the person who has held the product as a fraud determination target.

### (Operation for Registering Product)

Here, the operation for registering the product in the self-checkout machine 50 will be described. As the operation for registering the product, there is an operation for registering an item of a product in the self-checkout machine 50, via an operation on a selection screen in which a list of products with no barcode is displayed. Furthermore, there is an operation for registering an item of a product in the self-checkout machine 50 by scanning a barcode of a product with the barcode by the self-checkout machine 50.

The self-checkout machine 50 registers a product with no barcode in the cash register through manual input of a person. In some cases, the self-checkout machine 50 receives the register registration of the item of the product, from a selection screen in which the items of the products with no barcode are displayed. For example, the self-checkout machine 50 registers an item of a product selected by a user from the list of the items of the products with no barcodes in a recoding medium of the self-checkout machine 50, based on a user's touch operation on the selection screen. At this time, the product region specification unit 115 of the information processing device 100 specifies a product region of a product, with respect to a timing when the item of the product with no barcode is registered in the self-checkout machine 50.

The self-checkout machine 50 transmits a notification of scan information indicating that the operation for registering the product has been performed, to the information processing device 100, via the network. The product region specification unit 115 identifies the registration timing, based on the notification of the scan information from the self-checkout machine 50 via the network. Specifically, when the item of the product with no barcode is registered in the self-checkout machine 50, the product region specification unit 115 specifies the product region of the product from among the time-series coordinate positions that have been stored, with respect to the timing when the item of the product with no barcode is registered in the self-checkout machine 50. Note that the product region specification unit 115 may specify the product region of the product, with reference to a timing when the touch operation is performed on a display of the self-checkout machine 50.

On the other hand, the self-checkout machine 50 registers the product with the barcode in the cash register by scanning the barcode. The self-checkout machine 50 identifies an item of the product by scanning the barcode. Then, the self-checkout machine 50 registers the identified item of the product in the recoding medium of the self-checkout machine 50. At this time, the product region specification unit 115 of the information processing device 100 specifies the product region of the product, with reference to the timing when the item of the product is registered in the self-checkout machine 50, through scanning of the barcode.

The self-checkout machine 50 transmits a notification of scan information indicating that the operation for registering the product has been performed, to the information processing device 100, via the network. The product region specification unit 115 identifies the registration timing, based on the notification of the scan information from the self-checkout machine 50 via the network. Specifically, when the item of the product with the barcode is registered in the self-checkout machine 50, the product region specification unit 115 specifies the product region of the product from among the time-series coordinate positions that have been stored, with reference to the timing when the item of the product with the barcode is registered in the self-checkout machine 50.

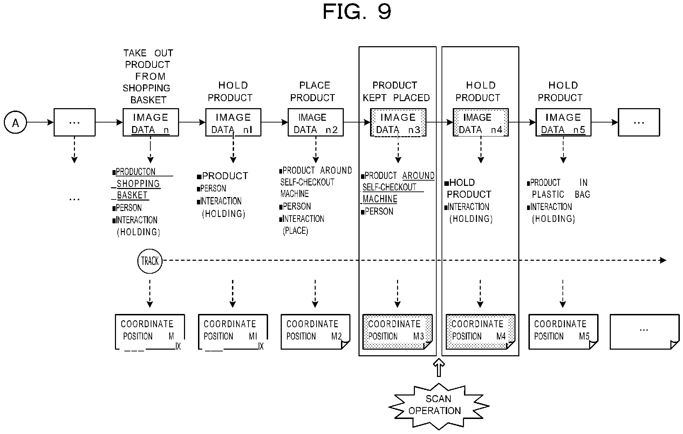

FIG. 9 is a diagram for explaining specification of information to be a determination target of fraud. In FIG. 9, as in FIG. 8, each of pieces of image data subsequent to image data n that is the input data into the HOID and a detection content of the HOID when each of the pieces of the image data subsequent to the image data n is sequentially input are illustrated.

As illustrated in FIG. 9, the region extraction unit 113 acquires the image data n in which a person who takes out a product from a shopping basket is imaged, inputs the image data n into the HOID, and detects a behavior of the user 2 for moving the holding product on the shopping basket, according to an output result. Then, the region extraction unit 113 starts tracking because the product is detected. Here, the coordinate position specification unit 114 acquires a coordinate position M of a product region of the tracked product.

Subsequently, the region extraction unit 113 acquires image data n1 in which a person holding a product is imaged, inputs the image data n1 into the HOID, and detects a behavior of the user 2 for taking out the product from the shopping basket and holding the product, according to an output result. Here, the coordinate position specification unit 114 acquires a coordinate position M1 of the product region of the tracked and held product.

Subsequently, the region extraction unit 113 acquires image data n2 in which a product held by a person around the self-checkout machine 50 is imaged, inputs the image data n2 into the HOID, and detects a behavior of the user 2 for placing the product around the self-checkout machine 50, according to an output result. Here, the coordinate position specification unit 114 acquires a coordinate position M2 of the product region of the tracked and placed product.

Subsequently, the region extraction unit 113 acquires image data n3 in which a product placed around the self-checkout machine 50 by a person is imaged, inputs the image data n3 into the HOID, and detects the product kept placed around the self-checkout machine 50, according to an output result. Here, the coordinate position specification unit 114 acquires a coordinate position M3 of the product region of the tracked and kept placed product.

Subsequently, the region extraction unit 113 acquires image data n4 in which a person is holding a product, inputs the image data n4 into the HOID, and detects a behavior of the user 2 for holding the product placed around the self-checkout machine 50, according to an output result. Here, the coordinate position specification unit 114 acquires a coordinate position M4 of the product region of the tracked and held product.

Thereafter, the region extraction unit 113 acquires image data n5 in which a person who puts a product in a plastic bag is imaged, inputs the image data n5 into the HOID, and detects a behavior of the user 2 for putting the holding product into the holding plastic bag, according to an output result. Then, the coordinate position specification unit 114 acquires the coordinate position M4 of the product region of the tracked product that is in the plastic bag, and tracking performed by the region extraction unit 113 ends.

In a situation where the time-series data of the coordinate positions is collected in this way, the product region specification unit 115 receives a scan result from the self-checkout machine 50. Then, the product region specification unit 115 specifies the coordinate position M3 immediately before a scan time included in the scan result and the coordinate position M4 immediately after the scan time. As a result, the product region specification unit 115 specifies the coordinate position of the product corresponding to the timing when the person has performed the operation for registering the product in the self-checkout machine 50, as the coordinate position M3 or the coordinate position M4.

Next, the product region specification unit 115 specifies image data of a region corresponding to the specified coordinate position that is a product region to be the determination target of the fraud. Here, a specification example of the product region to be the determination target of the fraud is described as an example using the coordinate position M3. However, the coordinate position M4 may be used.

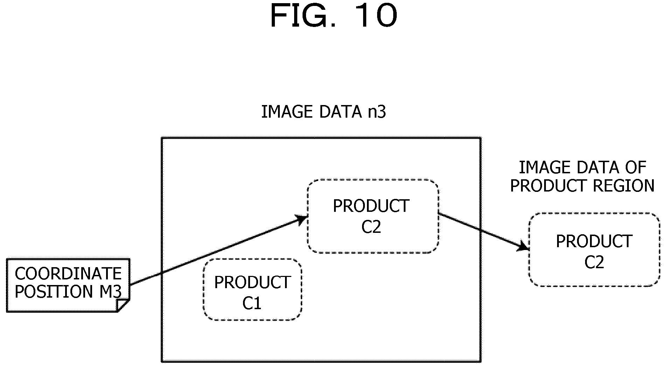

For example, the product region specification unit 115 specifies a region of a product including a coordinate position, from image data that is a coordinate position specification source, as the determination target of the fraud. FIG. 10 is a diagram for explaining specification of a product region used to determine fraud. As illustrated in FIG. 10, the product region specification unit 115 specifies a region of a product C2 including the coordinate position M3, in the image data n3 that is the specification source image data. Then, the product region specification unit 115 extracts image data including the region of the product C2 from the image data n3, as the image data of the product region to be the determination target of the fraud.

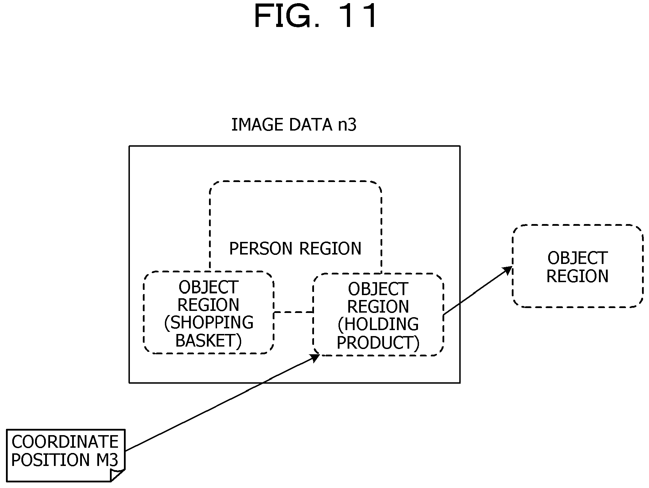

For example, the product region specification unit 115 can specify the specified region of the product including the coordinate position, from among a plurality of product regions extracted by the HOID, as the determination target of the fraud. FIG. 11 is a diagram for explaining specification of a product region used to determine fraud using the HOID. As illustrated in FIG. 11, the product region specification unit 115 specifies the region of the product C2 including the coordinate position M3, from among a person region, a region of a product C1, and the region of the product C2 extracted from the image data n3 by the HOID. Then, the product region specification unit 115 extracts image data including the region of the product C2 from the image data n3, as the image data of the product region to be the determination target of the fraud.

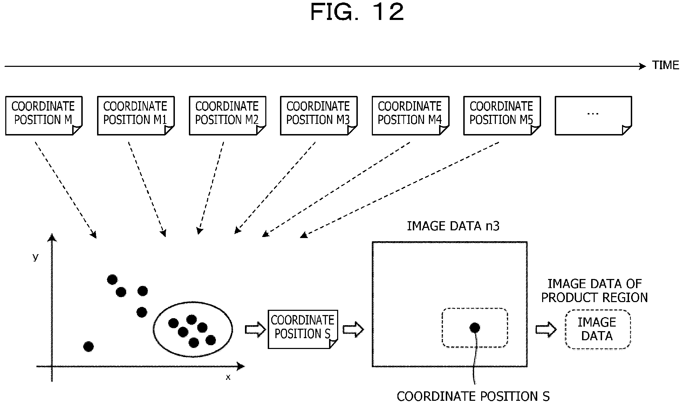

For example, the product region specification unit 115 can specify a product region to be the determination target of the fraud, based on a distribution of the time-series coordinate positions. FIG. 12 is a diagram for explaining specification of a product region used to determine fraud using a distribution. As illustrated in FIG. 12, the product region specification unit 115 plots each coordinate position (coordinate position M, coordinate position M1, ...) of the product to be tracked on the x axis and the y axis. Then, the product region specification unit 115 performs clustering and specifies a cluster including the largest number of coordinate positions. Thereafter, the product region specification unit 115 calculates a coordinate position S, based on the center in the cluster, an average value of all coordinate positions in the cluster, or the like. Then, the product region specification unit 115 extracts image data including the coordinate position S from the image data n3, as the image data of the product region to be the determination target of the fraud. Note that a size of the image data to be extracted (size of region) can be preset.

Note that the product region specification unit 115 can use a distribution of coordinate positions before the timing when the person has performed the operation for registering the product in the self-checkout machine 50, among all the coordinate positions, not limiting to a distribution of all the coordinate positions of the tracked product. In the example in FIG. 12, the product region specification unit 115 can use a distribution of the coordinate positions including the coordinate position M, the coordinate position M1, the coordinate position M2, and the coordinate position M3.

### (Detection of Fraud)

Returning to FIG. 3, the fraud detection unit 116 is a processing unit that specifies an item of a product by inputting the product region related to the product registered in the self-checkout machine 50 into the second machine learning model 105, and detects a fraudulent behavior when the item of the product registered in the self-checkout machine 50 by the person and the item of the product specified using the second machine learning model 105 do not match. That is, in a case where a scanned product is different from a product specified from a video, the fraud detection unit 116 determines that a fraudulent behavior occurs.

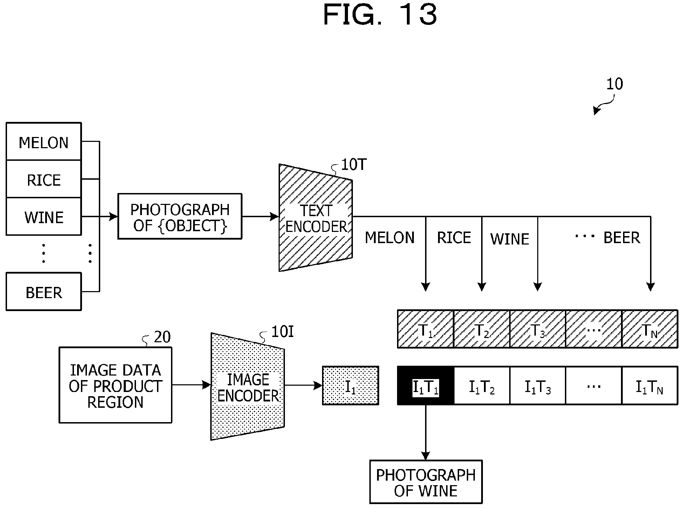

FIG. 13 is a diagram for explaining specification of a product item. As illustrated in FIG. 13, image data 20 of a product region specified as the determination target of the fraud by the product region specification unit 115 is input into the image encoder 10I of the CLIP model 10. As a result, the image encoder 10I outputs an embedding vector I₁ of the image data 20 of the product region.

On the other hand, texts such as "melon", "rice", "wine", and "beer" that have been prepared in advance are input, as a list of class captions, into the text encoder 10T of the CLIP model 10. At this time, the texts "melon", "rice", "wine", and "beer" can be input into the text encoder 10T. However, "Prompt Engineering" can be performed to convert a class caption format at the time of inference into a class caption format at the time of training. For example, it is possible to insert a text corresponding to an attribute of a product, for example, "drink" into a portion of {object} in "photograph of {object}" and makes an input as "photograph of drink".

As a result, the text encoder 10T outputs an embedding vector T₁ of the text "melon", an embedding vector T₂ of the text "rice", an embedding vector T₃ of the text "wine",... and an embedding vector T_{N} of the text "beer".

Then, a similarity is calculated between the embedding vector I₁ of the image data 20 of the product region, the embedding vector T₁ of the text "melon", the embedding vector T₂ of the text "rice", the embedding vector T₃ of the text "wine", and the embedding vector T_{N} of the text "beer".

As illustrated in black and white inverted display in FIG. 13, in this example, the similarity between the embedding vector I₁ of the image data 20 of the product region and the embedding vector T₁ of the text "wine" is the largest. Therefore, the CLIP model 10 outputs "wine" as a prediction result of the class of the image data 20 of the product region.

Next, the fraud detection unit 116 compares the product item "wine" specified using the second machine learning model 105 in this way and the product item registered in the self-checkout machine 50 and determines whether or not a fraudulent behavior has occurred.

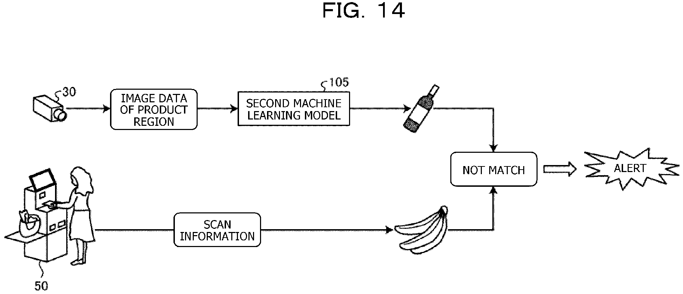

FIG. 14 is a diagram for explaining detection of a fraudulent behavior. As illustrated in FIG. 14, the fraud detection unit 116 specifies the product item "wine" from the video data by the method illustrated in FIG. 13. On the other hand, the fraud detection unit 116 acquires a product item "banana" registered in the self-checkout machine 50, from the self-checkout machine 50. Then, since the product items do not match, the fraud detection unit 116 determines that a fraudulent behavior has occurred, and notifies the warning control unit 117 of an alarm notification instruction including an identifier of the self-checkout machine 50 or the like.

### (Alert Notification)

The warning control unit 117 is a processing unit that generates an alert and performs alert notification control in a case where the fraud detection unit 116 detects the fraudulent behavior (fraudulent operation). For example, the warning control unit 117 generates an alert indicating that the product registered in the self-checkout machine 50 by the person is abnormal and outputs the alert to the self-checkout machine 50 and the administrator's terminal 60.

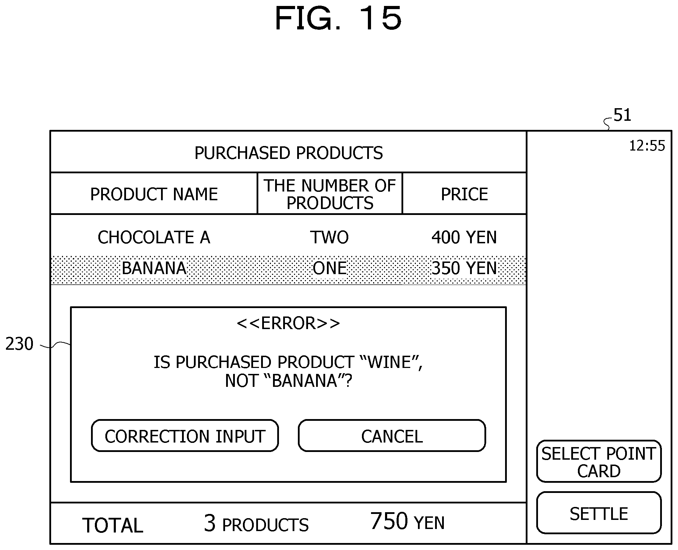

FIG. 15 is a diagram illustrating an alert display example on the self-checkout machine 50. In FIG. 15, an alert displayed on the self-checkout machine 50 when banana trick is detected is illustrated. As illustrated in FIG. 15, an alert window 230 is displayed on a touch panel 51 of the self-checkout machine 50. In this alert window 230, a product item "banana" registered in the cash register through manual input and the product item "wine" specified through image analysis by the second machine learning model 105 (for example, zero-shot image classifier) are displayed in a comparable state. In addition, the alert window 230 can include a notification that prompts to correct and input again. According to such display on the alert window 230, it is possible to warn the user of the detection of the banana trick for registering "banana" in the cash register through manual input, instead of registering "wine" in the cash register through manual input. Therefore, it is possible to urge the user to stop the settlement using the banana trick, and as a result, it is possible to suppress damages of a store caused by using the banana trick. Note that the warning control unit 117 can output content of the alert illustrated in FIG. 15 by voice.

Furthermore, the warning control unit 117 turns on a warning light provided in the self-checkout machine 50, displays the identifier of the self-checkout machine 50 and a message indicating a possibility of the occurrence of the fraud on the administrator's terminal 60, or transmits the identifier of the self-checkout machine 50 and a message indicating the occurrence of the fraud and necessity of confirmation to a terminal of a clerk in the store.

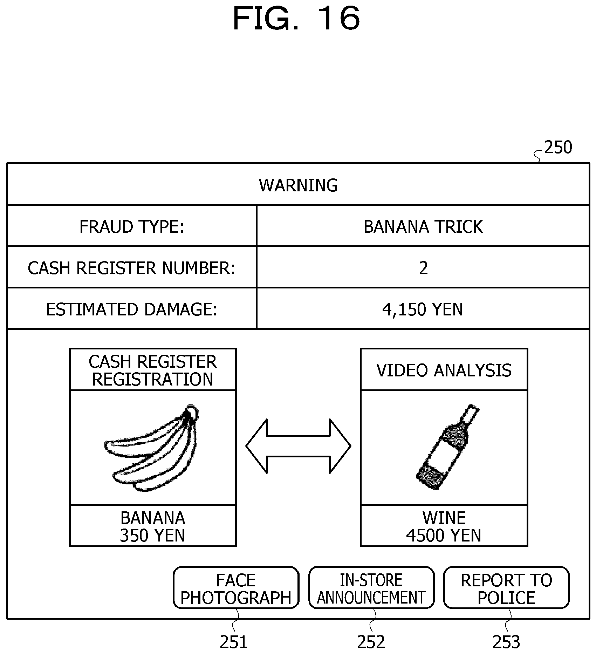

FIG. 16 is a diagram illustrating an alert display example to a clerk. In FIG. 16, an alert displayed on a display unit of the administrator's terminal 60 at the time when the banana trick is detected is illustrated. As illustrated in FIG. 16, an alert window 250 is displayed on the display unit of the administrator's terminal 60. In this alert window 250, a product item "banana" and a price "350 yen" registered in the cash register through manual input, the product item "wine" and a price "4500 yen" specified through image analysis are displayed in a comparable state. Moreover, in the alert window 250, a fraud type "banana trick", a cash register number "2" where the banana trick occurs, and a predicted damage amount "4150 yen (= 4500 yen - 350 yen)" caused by the settlement using the banana trick are displayed. In addition, in the alert window 250, graphical user interface (GUI) components 251 to 253 used to receive a request for a face photograph obtained by imaging the face of the user 2 who is using the self-checkout machine 50 having the cash register number "2" or the like, in-store announcement, or a notification to the police or the like, for example, are displayed. According to such display on the alert window 250, it is possible to realize the notification of the occurrence of the damage caused by the banana trick, grasping a damage degree, and presentation of various countermeasures for the damage. Therefore, it is possible to facilitate to take measures against the banana trick by the user 2, and as a result, it is possible to suppress the damage of the store caused by the banana trick.

Furthermore, in a case of generating an alert regarding an abnormality in the behavior for registering the product in the self-checkout machine 50, the warning control unit 117 causes the camera 30 included in the self-checkout machine 50 to image the person and stores the image data of the imaged person and the alert in the storage unit in association with each other. In this way, since information regarding a fraudulent person who performs a fraudulent behavior can be collected, the information can be used for various countermeasures to prevent a fraud in advance, for example, by detecting a visitor who has performed a fraudulent behavior at an entrance of the store. Furthermore, the warning control unit 117 generates a machine learning model through supervised learning using the image data of the fraudulent person so as to detect the fraudulent person from the image data of the person who uses the self-checkout machine 50, detect the fraudulent person at the entrance of the store, or the like. Furthermore, the warning control unit 117 can acquire information regarding a credit card of a person who has performed a fraudulent behavior from the self-checkout machine 50 and hold the information.

### (Settlement Processing)

Here, settlement processing of the self-checkout machine 50 will be described. The self-checkout machine 50 receives a checkout of an item of a registered product. The self-checkout machine 50 receives money used for the settlement of the product and pays change. The self-checkout machine 50 may execute the settlement processing using not only cash but also various credit cards, prepaid cards, or the like. Note that, when the alert regarding the abnormality in the behavior for registering the product is issued, the self-checkout machine 50 stops the settlement processing.

Furthermore, when receiving registration of an age-restricted product, the self-checkout machine 50 scans user's personal information, and executes settlement processing of the product registered in the self-checkout machine 50, based on the scanned result.

There is a case where the self-checkout machine 50 receives registration of an age-restricted product such as alcoholic beverages or cigarettes, as the operation for registering the product. The self-checkout machine 50 identifies the age-restricted product, by scanning a barcode of the product. The self-checkout machine 50 scans a my number card of a user or personal information stored in a terminal having a my number card function and specifies an age of the user from the date of birth. Then, when the age of the user is an age that is an age-restricted product sales target, the self-checkout machine 50 can permit to settle the product to be purchased by the user. On the other hand, when the age of the user is not the age that is the age-restricted product sales target, the self-checkout machine 50 outputs an alert indicating that the registered product cannot be sold. As a result, the self-checkout machine 50 can permit sales of alcoholic beverages, cigarettes, or the like, in consideration of the age restriction of the user.

### <Flow of Processing of Information Processing Device 100>

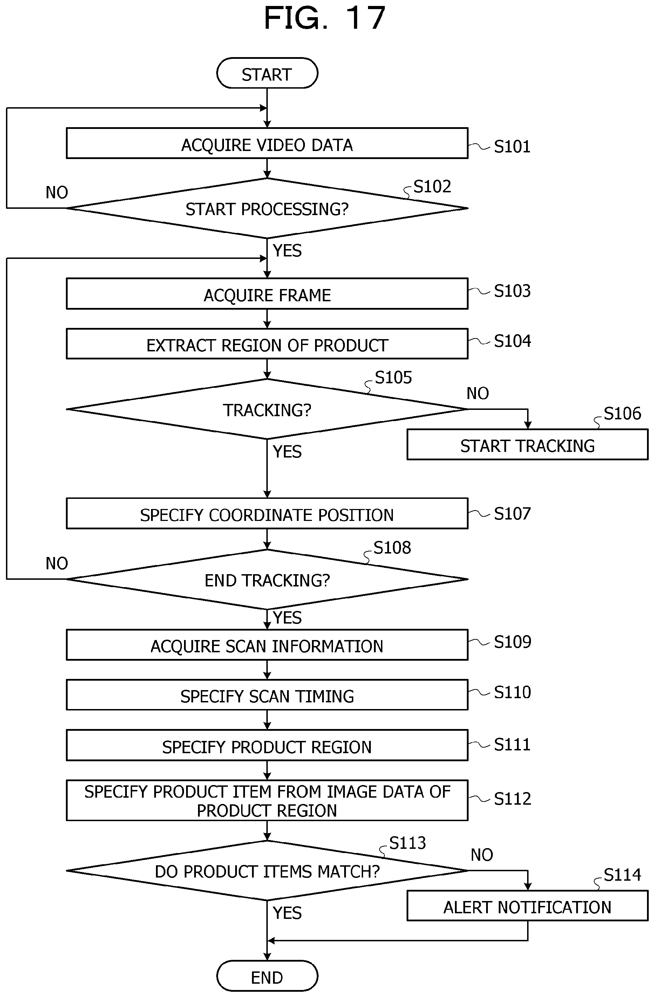

FIG. 17 is a flowchart illustrating a flow of processing of the information processing device 100. As illustrated in FIG. 17, the information processing device 100 acquires video data as needed (S101).

Subsequently, when being instructed to start fraud detection processing (S102: Yes), the information processing device 100 acquires a frame in the video data (S103), and extracts a region of a product using the first machine learning model 104 (S104).

Here, in a case where the detected product is not tracked yet (S105: No), the information processing device 100 starts tracking (S106). On the other hand, in a case where the detected product has been already tracked (S105: Yes) or in a case where tracking is started, the information processing device 100 specifies a coordinate position and holds the coordinate position as time-series data (S107).

Here, while continuing tracking (S108: No), the information processing device 100 repeats the processing in and subsequent to S103, and when tracking ends (S108: Yes), the information processing device 100 acquires scan information (scan result) including a scan time and a product item from the self-checkout machine 50 (S109).

Subsequently, the information processing device 100 specifies a scan timing, based on the scan information (S110) and specifies a product region to be a fraud behavior determination target based on the scan timing (S111).

Then, the information processing device 100 inputs image data of the product region into the second machine learning model 105 and specifies the product item (S112).

Here, in a case where the product item in the scan information and the product item specified using the second machine learning model 105 do not match (S113: No), the information processing device 100 notifies of an alert (S114), and in a case where the product items match (S113: Yes), the information processing device 100 ends the processing.

### <Flow of Processing of Self-checkout Machine 50>

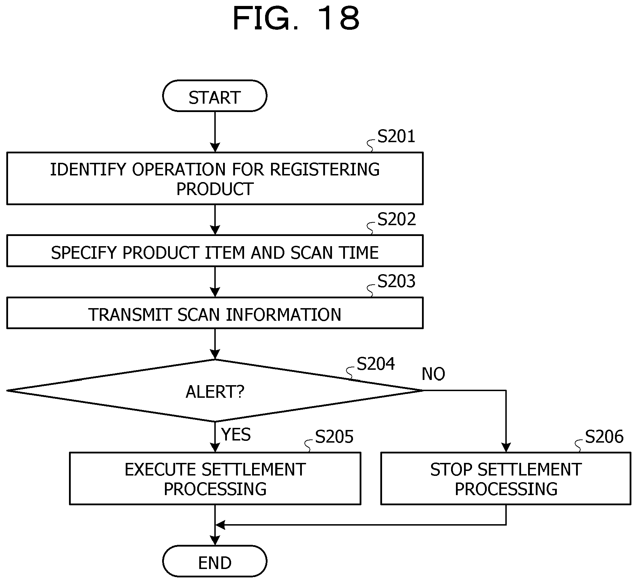

FIG. 18 is a flowchart illustrating a flow of processing of the self-checkout machine 50. As illustrated in FIG. 18, the self-checkout machine 50 identifies an operation for registering a product by a user. Specifically, the self-checkout machine 50 identifies the operation for registering the product, through an operation on a selection screen in which a list of products with no barcode is displayed. Furthermore, the self-checkout machine 50 identifies the operation for registering the product, by scanning a barcode of a product with the barcode (S201). Subsequently, the self-checkout machine 50 specifies a product item and a scan time. Specifically, the self-checkout machine 50 specifies the product item, based on the operation for registering the product. Furthermore, the self-checkout machine 50 specifies a time when the operation for registering the product is identified as the scan time, based on the operation for registering the product (S202). The self-checkout machine 50 transmits the scan information including the product item and the scan time, to the information processing device 100 (S203). Then, the self-checkout machine 50 determines whether or not there is an alert notified from the information processing device 100. In a case of determining that there is the alert, the self-checkout machine 50 proceeds to S205 (S204: Yes). On the other hand, in a case of determining that there is no alert, the self-checkout machine 50 proceeds to S206 (S204: No). The self-checkout machine 50 stops the settlement processing of the product item (S206). The self-checkout machine 50 executes the settlement processing of the product item (S205).

### <Effects>

As described above, the information processing device 100 acquires video data in a predetermined area including an accounting machine in which a person registers a product and inputs the video data into the first machine learning model 104 so as to extract a product region from the video data. The information processing device 100 stores time-series coordinate positions of the extracted product region, specifies a timing when the person performs the operation for registering the product in the self-checkout machine 50, and specifies a product region related to the product registered in the self-checkout machine 50, based on the specified timing of the operation and the time-series coordinate positions. As a result, since the information processing device 100 can specify the region of the product that is a fraud target from the video data, it is possible to recognize the product before the person ends the payment or before the person leaves the store, and it is possible to detect fraud in the self-checkout machine 50.

Furthermore, the information processing device 100 specifies an item of the product, by inputting the product region related to the product registered in the self-checkout machine 50 into the second machine learning model 105. When the item of the product registered in the self-checkout machine 50 by the person and the item of the product specified using the second machine learning model 105 do not match, the information processing device 100 generates an alert. Therefore, the information processing device 100 can detect fraud of scanning a barcode of an inexpensive product instead of that of an expensive product.

Furthermore, the information processing device 100 specifies the product region to be the fraud determination target, based on the coordinate position immediately before or immediately after the timing when the person performs the operation for registering the product in the self-checkout machine 50, from among the time-series coordinate positions. Therefore, since the information processing device 100 can accuracy specify the held product before and after the timing when the operation for registering the product is performed, the information processing device 100 can improve fraud detection accuracy.

Furthermore, the information processing device 100 specifies the product region to be the fraud determination target, from a distribution of the time-series coordinate positions. Therefore, even in a situation where it is difficult to make determination using the image data, for example, since the image data is unclear, the information processing device 100 can accurately specify the held product before and after the timing when the operation for registering the product is performed.

Furthermore, the information processing device 100 generates an alert indicating that the product registered in the self-checkout machine 50 by the person is abnormal. Therefore, the information processing device 100 can take measures such as asking circumstances before the person who has performed a fraudulent behavior goes out of the store.

Furthermore, in a case where the alert regarding the abnormality in the behavior for registering the product in the self-checkout machine 50 is generated, the information processing device 100 outputs voice or a screen indicating alert content from the self-checkout machine 50 to a person positioned by the self-checkout machine 50. Therefore, even in case of a force majeure mistake or an intentional fraud, the information processing device 100 can directly call attention to the person who is scanning. Therefore, it is possible to reduce mistakes and intentional fraud.

Furthermore, when the alert regarding the abnormality in the behavior for registering the product in the self-checkout machine 50 is generated, the information processing device 100 causes the camera of the self-checkout machine 50 to image the person and stores image data of the imaged person and the alert in the storage unit in association with each other. Therefore, since the information processing device 100 can collect and hold information regarding the fraudulent person who performs the fraudulent behavior, the information processing device 100 can use the information for various measures to prevent the fraud in advance, by detecting entrance of the fraudulent person from data captured by a camera that images customers. Furthermore, since the information processing device 100 can acquire and hold credit card information of the person who has performed the fraudulent behavior from the self-checkout machine 50, in a case where the fraudulent behavior is confirmed, it is possible to charge a fee via a credit card company.

### [Second Embodiment]

Incidentally, while the embodiment of the present disclosure has been described above, the present disclosure may be implemented in a variety of different modes in addition to the embodiment described above.

### (Numerical Values, etc.)

The numbers of self-checkout machines and cameras, numerical examples, training data examples, the number of pieces of training data, machine learning models, each class name, the number of classes, data formats, or the like used in the above embodiments are merely examples and can be arbitrarily changed. In addition, the processing flow described in each flowchart may be appropriately changed in a range without contradiction. Furthermore, for each model, a model generated by various algorithms such as a neural network may be adopted. Furthermore, the shopping basket is an example of a conveyance tool such as a shopping basket or a product cart used to carry a product to be purchased selected by a user in the store to a self-checkout machine, for example.

Furthermore, the information processing device 100 can use known techniques such as another machine learning model for detecting a position, object detection techniques, or position detection techniques, for the scan position and the position of the shopping basket. For example, since the information processing device 100 can detect the position of the shopping basket based on a time-series change of the frame that is a difference between the frames (image data), the information processing device 100 may perform detection using the position and generate another model using the position. Furthermore, by designating the size of the shopping basket in advance, in a case where an object having that size is detected from the image data, the information processing device 100 can identify the object as the position of the shopping basket. Note that, since the scan position is a position fixed to some extent, the information processing device 100 can identify a position designated by an administrator or the like as the scan position.

### (System)

Pieces of information including a processing procedure, a control procedure, a specific name, various types of data, and parameters described above or illustrated in the drawings may be optionally changed unless otherwise specified.

Furthermore, specific forms of distribution and integration of components of individual devices are not limited to those illustrated in the drawings. For example, the region extraction unit 113 and the coordinate position specification unit 114 may be integrated. That is, all or some of the components may be functionally or physically dispersed or integrated in optional units, depending on various kinds of loads, use situations, or the like. Moreover, all or some of the respective processing functions of the respective devices may be implemented by a central processing unit (CPU) and a program to be analyzed and executed by the CPU, or may be implemented as hardware by wired logic.

Moreover, all or some of processing functions individually performed in each device can be implemented by a central processing unit (CPU) and a program analyzed and executed by the CPU, or may be implemented as hardware by wired logic.

### (Hardware)

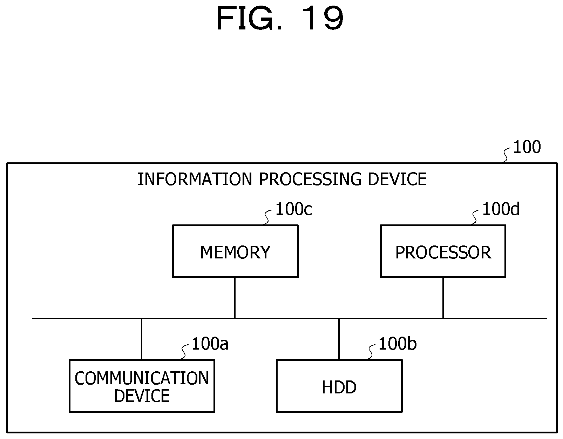

FIG. 19 is a diagram for explaining a hardware configuration example. Here, the information processing device 100 will be described as an example. As illustrated in FIG. 19, the information processing device 100 includes a communication device 100a, a hard disk drive (HDD) 100b, a memory 100c, and a processor 100d. Furthermore, the individual units illustrated in FIG. 19 are mutually coupled by a bus or the like.

The communication device 100a is a network interface card or the like and communicates with another device. The HDD 100b stores programs for operating the functions illustrated in FIG. 3 and databases (DBs).

The processor 100d reads a program that executes processing similar to the processing of each processing unit illustrated in FIG. 3 from the HDD 100b or the like, and develops the read program in the memory 100c to operate a process that executes each function described with reference to FIG. 3 or the like. For example, this process executes a function similar to the function of each processing unit included in the information processing device 100. Specifically, the processor 100d reads a program having functions similar to those of the machine learning unit 111, the video acquisition unit 112, the region extraction unit 113, the coordinate position specification unit 114, the product region specification unit 115, the fraud detection unit 116, the warning control unit 117, or the like from the HDD 100b or the like. Then, the processor 100d executes a process for executing processing similar to those of the machine learning unit 111, the video acquisition unit 112, the region extraction unit 113, the coordinate position specification unit 114, the product region specification unit 115, the fraud detection unit 116, the warning control unit 117, or the like.

As described above, the information processing device 100 works as an information processing device that executes an information processing method by reading and executing the program. In addition, the information processing device 100 can also implement functions similar to the functions of the above-described embodiments by reading the program described above from a recording medium by a medium reading device and executing the above read program. Note that other programs mentioned in the embodiments are not limited to being executed by the information processing device 100. For example, the embodiments described above may be similarly applied also to a case where another computer or server executes the program or a case where these computer and server cooperatively execute the program.

This program may be distributed via a network such as the Internet. In addition, this program may be recorded in a computer-readable recording medium such as a hard disk, a flexible disk (FD), a compact disc read only memory (CD-ROM), a magneto-optical disk (MO), or a digital versatile disc (DVD) and may be executed by being read from the recording medium by a computer.

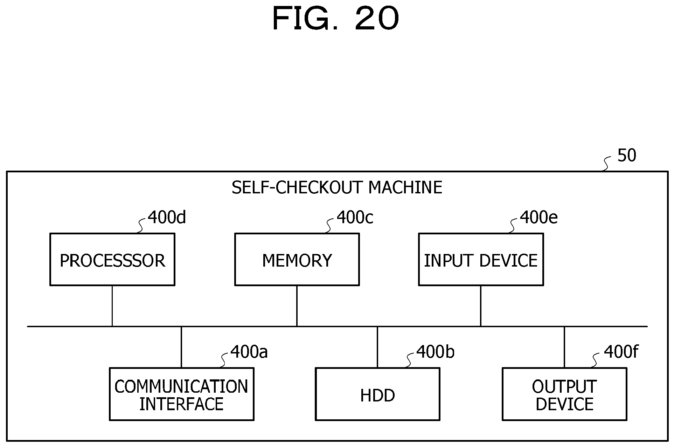

FIG. 20 is a diagram for explaining a hardware configuration example of the self-checkout machine 50. As illustrated in FIG. 20, the self-checkout machine 50 includes a communication interface 400a, an HDD 400b, a memory 400c, a processor 400d, an input device 400e, and an output device 400f. Furthermore, the individual units illustrated in FIG. 20 are mutually coupled by a bus or the like.

The communication interface 400a is a network interface card or the like, and communicates with other information processing devices. The HDD 400b stores a program for operating each function of the self-checkout machine 50 and data.

The processor 400d is a hardware circuit that reads the program that executes processing of each function of the self-checkout machine 50 from the HDD 400b or the like and develops the read program in the memory 400c to operate a process that executes each function of the self-checkout machine 50. That is, this process executes a function similar to each processing unit included in the self-checkout machine 50.

In this way, the self-checkout machine 50 operates as an information processing device that executes operation control processing by reading and executing the program that executes processing of each function of the self-checkout machine 50. Furthermore, the self-checkout machine 50 can implement each function of the self-checkout machine 50 by reading a program from a recoding medium by a medium reading device and executing the read program. Note that other programs mentioned in the embodiments are not limited to being executed by the self-checkout machine 50. For example, the present embodiment may be similarly applied to a case where another computer or server executes the program, or a case where these computer and server cooperatively execute the program.

Furthermore, the program that executes the processing of each function of the self-checkout machine 50 can be distributed via a network such as the Internet. Furthermore, this program can be recorded in a computer-readable recording medium such as a hard disk, an FD, a CD-ROM, an MO, or a DVD, and can be executed by being read from the recording medium by a computer.

The input device 400e detects various input operations by the user, such as an input operation for the program executed by the processor 400d. The input operation includes, for example, a touch operation or the like. In a case of the touch operation, the self-checkout machine 50 further includes a display unit, and the input operation detected by the input device 400e may be a touch operation on the display unit. The input device 400e may be, for example, a button, a touch panel, a proximity sensor, or the like. Furthermore, the input device 400e reads a barcode. The input device 400e is, for example, a barcode reader. The barcode reader includes a light source and an optical sensor and scans a barcode.

The output device 400f outputs data output from the program executed by the processor 400d via an external device coupled to the self-checkout machine 50, for example, an external display device or the like. Note that, in a case where the self-checkout machine 50 includes the display unit, the self-checkout machine 50 does not need to include the output device 400f.

## Claims

1. A computer program comprising instructions which, when the program is executed by a computer, cause the computer to carry out the following steps:
acquiring video data each image frame of which includes a self-checkout machine used to register products by a user by scanning barcodes of the products;
extracting, from the acquired video data, a Human-Object Interaction Detection, HOID, result based on image frames that include products by specifying a first region that includes a hand of the user, a second region that includes a product, and a relationship between the first region and the second region;
specifying a scan time when a product is registered to the self-checkout machine by the user and generating first product information specifying the product;
specifying a coordinate position (M3; M4) of a product at the scan time using the Human-Object Interaction Detection, HOID, result;
specifying a fraud determination region corresponding to the specified coordinate position (M3; M4);
extracting image frames including the fraud determination region;
specifying second product information specifying a product by inputting the extracted image frames to a machine learning model; and
generating an alert when the first product information and the second product information do not match.

2. The information processing program according to claim 1, wherein
the extracting includes extracting by specifying by inputting the acquired video data to a machine learning model that specifies a plurality of first regions that include a hand of a user, a plurality of second region that include a product, and a relationship between one of the plurality of first regions and one of the plurality of second regions according to an input of video data, for the image frames of the input.

3. The information processing program according to claim 1, wherein
the extracting includes extracting, from the acquired video data, the image frames that include the product held in the hand of the user and moved to one place selected from a place where a product that has been registered in the self-checkout machine is placed and outside of an angle of view of the video data.

4. The information processing program according to claim 1, wherein
the specifying includes specifying the certain image frames that include the second product based on one selected from average value of coordinates of the second region for the image frames and median value of coordinates of the second region for the image frames.

5. The information processing program according to claim 1, wherein
the generating includes notifying a terminal of a clerk of identification information of the self-checkout machine and the generated alert, in association with each other, when an alert regarding an abnormality in a behavior of registering the product in the self-checkout machine is generated.

6. The information processing program according to claim 1, wherein
the generating the alert includes
in a case where an alert regarding an abnormality in a behavior of registering the product in the self-checkout machine is generated, outputting a voice or a screen with alert content from the self-checkout machine to the user positioned at the self-checkout machine.

7. The information processing program according to claim 1, wherein
the generating includes:
when an alert regarding an abnormality in a behavior of registering a product in the self-checkout machine is generated, causing a camera included in the self-checkout machine to image the user, and
storing imaged frames of the user and the alert in the memory in association with each other.

8. The information processing program according to claim 1, wherein
the registering the product in the self-checkout machine is a first operation of registering the product selected by the user in the self-checkout machine, based on a selection operation on a selection screen in which an item of a product with no barcode is displayed,
wherein the process further comprising
when the item of the product registered in the self-checkout machine and an item of the product included in the specified product region do not match, notifying of an alert regarding an abnormality of the product registered in the self-checkout machine.

9. The information processing program according to claim 8, wherein
the specifying includes:
when an item of a product with no barcode is registered in the self-checkout machine based on the first operation, specifying a scan time with reference to an operation of registering the item of the product with no barcode into the self-checkout machine, by using a notification from the self-checkout machine via a network, and
specifying a product region of the product from the time-series coordinate positions stored in the memory, based on the specified scan time with reference to the operation.

10. The information processing program according to claim 1, wherein
the operation of registering a product in the self-checkout machine is a second operation of registering an item of a product in the self-checkout machine, by scanning a barcode of a product with the barcode,
wherein the process further comprising
when the item of the product registered in the self-checkout machine and an item of the product included in the specified product region do not match, notifying of an alert regarding an abnormality of the product registered in the self-checkout machine.

11. The information processing program according to claim 10, wherein
the specifying includes:
when an item of the product with the barcode is registered in the self-checkout machine, specifying a scan time with reference to an operation of registering the item of the product with the barcode in the self-checkout machine, by using a notification from the self-checkout machine via a network and
specifying a product region of the product from the time-series coordinate positions stored in the memory, based on the timing with reference to the operation.

12. An information processing method for a computer to execute a process comprising:
acquiring video data each image frame of which includes a self-checkout machine used to register products by a user by scanning barcodes of the products;
extracting, from the acquired video data, a Human-Object Interaction Detection, HOID, result based on image frames that include products by specifying a first region that includes a hand of the user, a second region that includes a product, and a relationship between the first region and the second region;
specifying a scan time when a product is registered to the self-checkout machine by the user and generating first product information specifying the product;
specifying a coordinate position (M3; M4) of a product at the scan time using the Human-Object Interaction Detection, HOID, result;
specifying a fraud determination region corresponding to the specified coordinate position (M3; M4);
extracting image frames including the fraud determination region;
specifying second product information specifying a product by inputting the extracted image frames to a machine learning model; and
generating an alert when the first product information and the second product information do not match.

13. An information processing device comprising:
a control unit configured to:
acquire video data each image frame of which includes a self-checkout machine used to register a product by a user by scanning barcodes of the products ,
extract, from the acquired video data, a Human-Object Interaction Detection, HOID, result based on image frames that include products by specifying a first region that includes a hand of the user, a second region that includes a product, and a relationship between the first region and the second region,
specify a scan time when a product is registered to the self-checkout machine by the user and generating first product information specifying the product ,
specifying a coordinate position (M3; M4) of a product at the scan time using the Human-Object Interaction Detection, HOID, result;
specifying a fraud determination region corresponding to the specified coordinate position (M3; M4);
extracting image frames including the fraud determination region;
specify second product information specifying a product by inputting the extracted image frames to a machine learning model, and
generate an alert when the first product information and the second product information do not match.

## Patentansprüche

1. Computerprogramm, das Anweisungen umfasst, die, wenn das Programm von einem Computer ausgeführt wird, den Computer veranlassen, die folgenden Schritte durchzuführen:
Erhalten von Videodaten, bei denen jedes Einzelbild eine Selbstbedienungskasse einschließt, die verwendet wird, um Produkte durch einen Benutzer zu registrieren, indem Barcodes der Produkte gescannt werden;
Extrahieren, aus den erhaltenen Videodaten, eines Ergebnisses einer Erfassung einer Mensch-Objekt-Interaktion, HOID, auf der Grundlage von Einzelbildern, die Produkte einschließen, durch Spezifizieren eines ersten Bereichs, der eine Hand des Benutzers einschließt, eines zweiten Bereichs, der ein Produkt einschließt, und einer Beziehung zwischen dem ersten Bereich und dem zweiten Bereich;
Spezifizieren einer Scanzeit, wenn ein Produkt an der Selbstbedienungskasse durch den Benutzer registriert wird, und Erzeugen von ersten Produktinformationen, die das Produkt spezifizieren;
Spezifizieren einer Koordinatenposition (M3; M4) eines Produkts zur Scanzeit unter Verwendung des Ergebnisses der Erfassung der Mensch-Objekt-Interaktion, HOID;
Spezifizieren eines Betrugsbestimmungsbereichs, der der spezifizierten Koordinatenposition (M3; M4) entspricht;
Extrahieren von Einzelbildern, die den Betrugsbestimmungsbereich einschließen;
Spezifizieren von zweiten Produktinformationen, die ein Produkt spezifizieren, durch Eingeben der extrahierten Einzelbilder in ein Modell für maschinelles Lernen; und
Erzeugen einer Warnung, wenn die ersten Produktinformationen und die zweiten Produktinformationen nicht übereinstimmen.

2. Informationsverarbeitungsprogramm nach Anspruch 1, wobei
das Extrahieren das Extrahieren durch Spezifizieren durch Eingeben der erhaltenen Videodaten in ein Modell für maschinelles Lernen einschließt, das eine Vielzahl von ersten Bereichen, die eine Hand eines Benutzers einschließen, eine Vielzahl von zweiten Bereichen, die ein Produkt einschließen, und eine Beziehung zwischen einem der Vielzahl von ersten Bereichen und einem der Vielzahl von zweiten Bereichen gemäß einer Eingabe von Videodaten für die Einzelbilder der Eingabe spezifiziert.

3. Informationsverarbeitungsprogramm nach Anspruch 1, wobei
das Extrahieren das Extrahieren der Einzelbilder aus den erhaltenen Videodaten einschließt, die das Produkt einschließen, das in der Hand des Benutzers gehalten wird und zu einer Stelle bewegt wird, die ausgewählt wird aus einer Stelle, an der ein Produkt, das in der Selbstbedienungskasse registriert wurde, platziert ist, und einer Stelle außerhalb eines Sichtwinkels der Videodaten.

4. Informationsverarbeitungsprogramm nach Anspruch 1, wobei
das Spezifizieren das Spezifizieren der gewissen Einzelbilder, die das zweite Produkt einschließen, auf der Grundlage eines Kriteriums einschließt, das ausgewählt wird aus einem Durchschnittswert von Koordinaten des zweiten Bereichs für die Einzelbilder und einem Medianwert von Koordinaten des zweiten Bereichs für die Einzelbilder.

5. Informationsverarbeitungsprogramm nach Anspruch 1, wobei
das Erzeugen das Mitteilen von Identifikationsinformationen der Selbstbedienungskasse und der erzeugten Warnung im Zusammenhang miteinander an ein Endgerät eines Angestellten einschließt, wenn eine Warnung hinsichtlich einer Anomalie in einem Verhalten des Registrierens des Produkts in der Selbstbedienungskasse erzeugt wird.

6. Informationsverarbeitungsprogramm nach Anspruch 1, wobei
das Erzeugen der Warnung Folgendes einschließt
in einem Fall, bei dem eine Warnung hinsichtlich einer Anomalie in einem Verhalten des Registrierens des Produkts in der Selbstbedienungskasse erzeugt wird, das Ausgeben einer Stimme oder eines Bildschirms mit Warninhalt von der Selbstbedienungskasse an den an der Selbstbedienungskasse befindlichen Benutzer.

7. Informationsverarbeitungsprogramm nach Anspruch 1, wobei
das Erzeugen Folgendes einschließt:
wenn eine Warnung hinsichtlich einer Anomalie in einem Verhalten des Registrierens eines Produkts in der Selbstbedienungskasse erzeugt wird, Bewirken, dass eine in der Selbstbedienungskasse eingeschlossene Kamera den Benutzer abbildet, und
Speichern von abgebildeten Einzelbildern des Benutzers und der Warnung im Speicher im Zusammenhang miteinander.

8. Informationsverarbeitungsprogramm nach Anspruch 1, wobei
das Registrieren des Produkts in der Selbstbedienungskasse ein erster Vorgang der Registrierung des Produkts ist, das von dem Benutzer in der Selbstbedienungskasse auf der Grundlage eines Auswählvorgangs auf einem Auswahlbildschirm ausgewählt wird, auf dem ein Artikel eines Produkts ohne Barcode angezeigt wird,
wobei der Prozess weiter Folgendes umfasst
wenn der Artikel des in der Selbstbedienungskasse registrierten Produkts und ein Artikel des im spezifizierten Produktbereich eingeschlossenen Produkts nicht übereinstimmen, Mitteilen einer Warnung hinsichtlich einer Anomalie des in der Selbstbedienungskasse registrierten Produkts.

9. Informationsverarbeitungsprogramm nach Anspruch 8, wobei
das Spezifizieren Folgendes einschließt:
wenn ein Artikel eines Produkts ohne Barcode in der Selbstbedienungskasse auf der Grundlage des ersten Vorgangs registriert wird, Spezifizieren einer Scanzeit in Bezug auf einen Registriervorgang des Artikels des Produkts ohne Barcode in der Selbstbedienungskasse durch Verwenden einer Mitteilung von der Selbstbedienungskasse über ein Netzwerk, und
Spezifizieren eines Produktbereichs des Produkts aus den Zeitreihen-Koordinatenpositionen, die im Speicher gespeichert sind, auf der Grundlage der spezifizierten Scanzeit in Bezug auf den Vorgang.

10. Informationsverarbeitungsprogramm nach Anspruch 1, wobei
der Vorgang des Registrierens eines Produkts in der Selbstbedienungskasse ein zweiter Vorgang des Registrierens eines Artikels eines Produkts in der Selbstbedienungskasse ist, indem ein Barcode eines Produkts mit dem Barcode gescannt wird,
wobei der Prozess weiter Folgendes umfasst
wenn der Artikel des in der Selbstbedienungskasse registrierten Produkts und ein Artikel des im spezifizierten Produktbereich eingeschlossenen Produkts nicht übereinstimmen, Mitteilen einer Warnung hinsichtlich einer Anomalie des in der Selbstbedienungskasse registrierten Produkts.

11. Informationsverarbeitungsprogramm nach Anspruch 10, wobei
das Spezifizieren Folgendes einschließt:
wenn ein Artikel des Produkts mit dem Barcode in der Selbstbedienungskasse registriert wird, Spezifizieren einer Scanzeit in Bezug auf einen Registriervorgang des Artikels des Produkts mit dem Barcode in der Selbstbedienungskasse durch Verwenden einer Mitteilung von der Selbstbedienungskasse über ein Netzwerk und
Spezifizieren eines Produktbereichs des Produkts aus den Zeitreihen-Koordinatenpositionen im Speicher auf der Grundlage der Zeit in Bezug auf den Vorgang.

12. Informationsverarbeitungsverfahren für einen Computer zum Ausführen eines Prozesses, umfassend:
Erhalten von Videodaten, bei denen jedes Einzelbild eine Selbstbedienungskasse einschließt, die verwendet wird, um Produkte durch einen Benutzer zu registrieren, indem Barcodes der Produkte gescannt werden;
Extrahieren, aus den erhaltenen Videodaten, eines Ergebnisses einer Erfassung einer Mensch-Objekt-Interaktion, HOID, auf der Grundlage von Einzelbildern, die Produkte einschließen, durch Spezifizieren eines ersten Bereichs, der eine Hand des Benutzers einschließt, eines zweiten Bereichs, der ein Produkt einschließt, und einer Beziehung zwischen dem ersten Bereich und dem zweiten Bereich;
Spezifizieren einer Scanzeit, wenn ein Produkt an der Selbstbedienungskasse durch den Benutzer registriert wird, und Erzeugen von ersten Produktinformationen, die das Produkt spezifizieren;
Spezifizieren einer Koordinatenposition (M3; M4) eines Produkts zur Scanzeit unter Verwendung des Ergebnisses der Erfassung der Mensch-Objekt-Interaktion, HOID;
Spezifizieren eines Betrugsbestimmungsbereichs, der der spezifizierten Koordinatenposition (M3; M4) entspricht;
Extrahieren von Einzelbildern, die den Betrugsbestimmungsbereich einschließen;
Spezifizieren von zweiten Produktinformationen, die ein Produkt spezifizieren, durch Eingeben der extrahierten Einzelbilder in ein Modell für maschinelles Lernen; und
Erzeugen einer Warnung, wenn die ersten Produktinformationen und die zweiten Produktinformationen nicht übereinstimmen.

13. Informationsverarbeitungsvorrichtung, umfassend:
eine Steuereinheit, die konfiguriert ist zum:
Erhalten von Videodaten, bei denen jedes Einzelbild eine Selbstbedienungskasse einschließt, die verwendet wird, um ein Produkt durch einen Benutzer zu registrieren, indem Barcodes der Produkte gescannt werden,
Extrahieren, aus den erhaltenen Videodaten, eines Ergebnisses einer Erfassung einer Mensch-Objekt-Interaktion, HOID, auf der Grundlage von Einzelbildern, die Produkte einschließen, durch Spezifizieren eines ersten Bereichs, der eine Hand des Benutzers einschließt, eines zweiten Bereichs, der ein Produkt einschließt, und einer Beziehung zwischen dem ersten Bereich und dem zweiten Bereich,
Spezifizieren einer Scanzeit, wenn ein Produkt an der Selbstbedienungskasse durch den Benutzer registriert wird, und Erzeugen von ersten Produktinformationen, die das Produkt spezifizieren,
Spezifizieren einer Koordinatenposition (M3; M4) eines Produkts zur Scanzeit unter Verwendung des Ergebnisses der Erfassung der Mensch-Objekt-Interaktion, HOID;
Spezifizieren eines Betrugsbestimmungsbereichs, der der spezifizierten Koordinatenposition (M3; M4) entspricht;
Extrahieren von Einzelbildern, die den Betrugsbestimmungsbereich einschließen;
Spezifizieren von zweiten Produktinformationen, die ein Produkt spezifizieren, durch Eingeben der extrahierten Einzelbilder in ein Modell für maschinelles Lernen, und
Erzeugen einer Warnung, wenn die ersten Produktinformationen und die zweiten Produktinformationen nicht übereinstimmen.

## Revendications

1. Programme informatique comprenant des instructions qui, lorsque le programme est exécuté par un ordinateur, amènent l'ordinateur à mettre en œuvre les étapes suivantes :
l'acquisition de données vidéo dont chaque trame d'image inclut une caisse automatique utilisée pour enregistrer des produits par un utilisateur en balayant des codes-barres des produits ;
l'extraction, à partir des données vidéo acquises, d'un résultat de détection d'interaction homme-objet, HOID, sur la base de trames d'image qui incluent des produits en spécifiant une première région qui inclut une main de l'utilisateur, une deuxième région qui inclut un produit, et une relation entre la première région et la deuxième région ;
la spécification d'un moment de balayage lorsqu'un produit est enregistré sur la caisse automatique par l'utilisateur et la génération de premières informations de produit spécifiant le produit ;
la spécification d'une position (M3 ; M4) de coordonnées d'un produit au moment de balayage en utilisant le résultat de détection d'interaction homme-objet, HOID ;
la spécification d'une région de détermination de fraude correspondant à la position (M3 ; M4) de coordonnées spécifiée ;
l'extraction de trames d'image incluant la région de détermination de fraude ;
la spécification de deuxièmes informations de produit spécifiant un produit en indroduisant les trames d'image extraites dans un modèle d'apprentissage automatique ; et
la génération d'une alerte lorsque les premières informations de produit et les deuxièmes informations de produit ne correspondent pas.

2. Programme de traitement d'informations selon la revendication 1, dans lequel
l'extraction inclut l'extraction par spécification en entrant les données vidéo acquises dans un modèle d'apprentissage automatique qui spécifie une pluralité de premières régions qui incluent une main d'un utilisateur, une pluralité de deuxièmes régions qui incluent un produit, et une relation entre l'une de la pluralité de premières régions et l'une de la pluralité de deuxièmes régions selon une entrée de données vidéo, pour les trames d'image de l'entrée.

3. Programme de traitement d'informations selon la revendication 1, dans lequel
l'extraction inclut l'extraction, à partir des données vidéo acquises, des trames d'image qui incluent le produit tenu dans la main de l'utilisateur et déplacé vers un endroit sélectionné parmi un endroit où un produit qui a été enregistré dans la caisse automatique est placé et en dehors du champ de vision des données vidéo.

4. Programme de traitement d'informations selon la revendication 1, dans lequel
la spécification inclut la spécification de certaines trames d'image qui incluent le deuxième produit sur la base d'une valeur sélectionnée parmi la valeur moyenne de coordonnées de la deuxième région pour les trames d'image et la valeur médiane de coordonnées de la deuxième région pour les trames d'image.

5. Programme de traitement d'informations selon la revendication 1, dans lequel
la génération inclut la notification à un terminal d'un opérateur d'informations d'identification de la caisse automatique et de l'alerte générée, en association les unes avec les autres, lorsqu'une alerte concernant une anomalie dans un comportement d'enregistrement du produit dans la caisse automatique est générée.

6. Programme de traitement d'informations selon la revendication 1, dans lequel
la génération de l'alerte inclut
dans un cas où une alerte concernant une anomalie dans un comportement d'enregistrement du produit dans la caisse automatique est générée, la sortie d'une voix ou d'un écran avec un contenu d'alerte de la caisse automatique à l'utilisateur positionné au niveau de la caisse automatique.

7. Programme de traitement d'informations selon la revendication 1, dans lequel
la génération inclut :
lorsqu'une alerte concernant une anomalie dans un comportement d'enregistrement d'un produit dans la caisse automatique est générée, le fait d'amener une caméra incluse dans la caisse automatique à imager l'utilisateur, et
le stockage de trames capturées de l'utilisateur et de l'alerte dans la mémoire en association les unes avec les autres.

8. Programme de traitement d'informations selon la revendication 1, dans lequel
l'enregistrement du produit dans la caisse automatique est une première opération d'enregistrement du produit sélectionné par l'utilisateur dans la caisse automatique, sur la base d'une opération de sélection sur un écran de sélection dans lequel un article d'un produit sans code-barres est affiché,
dans lequel le processus comprend en outre
lorsque l'article du produit enregistré dans la caisse automatique et un article du produit inclus dans la région de produit spécifiée ne correspondent pas, la notification d'une alerte concernant une anomalie du produit enregistré dans la caisse automatique.

9. Programme de traitement d'informations selon la revendication 8, dans lequel
la spécification inclut :
lorsqu'un article d'un produit sans code-barres est enregistré dans la caisse automatique sur la base de la première opération, la spécification d'un moment de balayage en référence à une opération d'enregistrement de l'article du
produit sans code-barres dans la caisse automatique, en utilisant une notification de la caisse automatique via un réseau, et
la spécification d'une région de produit du produit à partir des positions de coordonnées de série temporelle stockées dans la mémoire, sur la base du moment de balayage spécifié en référence à l'opération.

10. Programme de traitement d'informations selon la revendication 1, dans lequel
l'opération d'enregistrement d'un produit dans la caisse automatique est une deuxième opération d'enregistrement d'un article d'un produit dans la caisse automatique, par balayage d'un code-barres d'un produit avec le code-barres,
dans lequel le processus comprend en outre
lorsque l'article du produit enregistré dans la caisse automatique et un article du produit inclus dans la région de produit spécifiée ne correspondent pas, la notification d'une alerte concernant une anomalie du produit enregistré dans la caisse automatique.

11. Programme de traitement d'informations selon la revendication 10, dans lequel
la spécification inclut :
lorsqu'un article du produit avec le code-barres est enregistré dans la caisse automatique, la spécification d'un moment de balayage en référence à une opération d'enregistrement de l'article du produit avec le code-barres dans la caisse automatique, en utilisant une notification de la caisse automatique via un réseau et
la spécification d'une région de produit du produit à partir des positions de coordonnées de série temporelle stockées dans la mémoire, sur la base du moment en référence à l'opération.

12. Procédé de traitement d'informations pour amener un ordinateur à exécuter un processus comprenant :
l'acquisition de données vidéo dont chaque trame d'image inclut une caisse automatique utilisée pour enregistrer des produits par un utilisateur en balayant des codes-barres des produits ;
l'extraction, à partir des données vidéo acquises, d'un résultat de détection d'interaction homme-objet, HOID, sur la base de trames d'image qui incluent des produits en spécifiant une première région qui inclut une main de l'utilisateur, une deuxième région qui inclut un produit, et une relation entre la première région et la deuxième région ;
la spécification d'un moment de balayage lorsqu'un produit est enregistré sur la caisse automatique par l'utilisateur et la génération de premières informations de produit spécifiant le produit ;
la spécification d'une position (M3 ; M4) de coordonnées d'un produit au moment de balayage en utilisant le résultat de détection d'interaction homme-objet, HOID ;
la spécification d'une région de détermination de fraude correspondant à la position (M3 ; M4) de coordonnées spécifiée ;
l'extraction de trames d'image incluant la région de détermination de fraude ;
la spécification de deuxièmes informations de produit spécifiant un produit en introduisant les trames d'image extraites dans un modèle d'apprentissage automatique ; et
la génération d'une alerte lorsque les premières informations de produit et les deuxièmes informations de produit ne correspondent pas.

13. Dispositif de traitement d'informations comprenant :
une unité de commande configurée pour :
acquérir des données vidéo dont chaque trame d'image inclut une caisse automatique utilisée pour enregistrer un produit par un utilisateur en balayant des codes-barres des produits,
extraire, à partir des données vidéo acquises, un résultat de détection d'interaction homme-objet, HOID, sur la base de trames d'image qui incluent des produits en spécifiant une première région qui inclut une main de l'utilisateur, une deuxième région qui inclut un produit, et une relation entre la première région et la deuxième région,
spécifier un moment de balayage lorsqu'un produit est enregistré sur la caisse automatique par l'utilisateur et générer de premières informations de produit spécifiant le produit,
spécifier une position (M3 ; M4) de coordonnées d'un produit au moment de balayage en utilisant le résultat de détection d'interaction homme-objet, HOID ;
spécifier une région de détermination de fraude correspondant à la position (M3 ; M4) de coordonnées spécifiée ;
extraire des trames d'image incluant la région de détermination de fraude ;
spécifier de deuxièmes informations de produit spécifiant un produit en introduisant les trames d'image extraites dans un modèle d'apprentissage automatique, et
générer une alerte lorsque les premières informations produit et les deuxièmes informations produit ne correspondent pas.
